# EUROPÄISCHE PATENTSCHRIFT

(11) **EP 3 421 169 B1**
(45) Veröffentlichungstag und Bekanntmachung des Hinweises auf die Patenterteilung: **08.09.2021**
(21) Anmeldenummer: 18174069.7
(22) Anmeldetag: 24.05.2018
(51) Int. Cl.: B23K 26/06, B23K 26/70, B23K 26/14

(54) **SCHUTZGLAS MIT EINEM TRANSPONDER UND EINBAUHILFE ; ZUGEHÖRIGE SCHUTZGLASKASSETTE UND LASERWERKZEUG**
PROTECTIVE GLASS WITH A TRANSPONDER AND AN INSTALLATION AID ; CORRESPONDING PROTECTIVE GLAS CASSETTE AND LASER TOOL
VERRE DE PROTECTION DOTÉ D'UN TRANSPONDEUR ET D'UNE AIDE DE MONTAGE ;CASSETTE AVEC VERRE DE PROTECTION ET OUTIL LASER ASSOCIÉS

(30) Priorität: 08.06.2017 DE 102017209696
(43) Veröffentlichungstag der Anmeldung: 02.01.2019
(73) Patentinhaber: TRUMPF Laser GmbH, 78713 Schramberg (DE)
(72) Erfinder: Hutt, Jochen, 78713 Schramberg (DE); Flaig, Rainer, 78664 Eschbronn (DE); Broghammer, Gerhard, 78662 Bösingen (DE); Harteker, Michael, 78628 Rottweil (DE); Hezel, Marius, 78662 Bösingen (DE); Fichter, Matthias, 78713 Schramberg (DE); Kaiser, Bernhard, 78126 Königsfeld (DE)
(74) Vertreter: Kohler Schmid Möbus Patentanwälte

(56) Entgegenhaltungen:
- CN-U- 204 524 546
- CN-U- 205 587 836
- DE-A1-102015 200 263
- DE-A1-102015 223 884

## Beschreibung

Die Erfindung betrifft ein Schutzglas, bestimmt zum Einbau in ein Laserwerkzeug einer Laserbearbeitungsmaschine gemäß dem Oberbegriff des Anspruchs 1 (siehe z.B. DE 10 2015 223 884 A1). Die Erfindung betrifft auch eine Schutzglaskassette mit einem solchen Schutzglas, siehe Anspruch 8, und ein Laserwerkzeug mit einer solchen Kassette, siehe Anspruch 10.

Ein anderes Schutzglas ist beispielsweise durch die DE 10 2011 078 359 A1 bekannt geworden.

Laserwerkzeuge (Laserbearbeitungskopf) von Laserbearbeitungsmaschinen weisen meist eine Fokussieroptik zum Fokussieren des auf ein Werkstück gerichteten Laserstrahls und ein der Fokussieroptik vorgeordnetes Schutzglas auf, um die Fokussieroptik vor Verschmutzung durch die bei der Werkstückbearbeitung auftretenden Partikel und Dämpfe zu schützen. Beim Einbau in das Laserwerkzeug muss das Schutzglas mit den Fingern aufgenommen und in einen Schutzglashalter des Laserwerkzeugs gelegt werden, ohne dabei das Schutzglas durch Fingerabdrücke zu verschmutzen.

Aus der DE 10 2011 078 359 A1 ist es bekannt, an einem optischen Element der Laserbearbeitungsmaschine einen Transponder anzuordnen, in dem Daten bezüglich des optischen Elements, also beispielsweise bzgl. der Historie und des Verschmutzungszustands, gespeichert sind. Der Transponder, z.B. ein RFID-Etikett, wird auf einer im Betrieb einer Laserbearbeitungsmaschine optisch ungenutzten oder vom Laserstrahl nicht erfassten Fläche des optischen Elements angebracht und kann ohne mechanische Kontaktierung beschrieben und gelesen werden. Im Fall eines Schutzglases können im Transponder beispielsweise der zulässige Wellenlängenbereich, der aktuelle Verschmutzungsgrad, die Einsatzdauer und eine Reihe anderer Parameter des Schutzglases gespeichert und somit direkt dem jeweiligen Schutzglas zugeordnet sein.

Demgegenüber liegt der vorliegenden Erfindung die Aufgabe zugrunde, ein Schutzglas der eingangs genannten Art dahingehend weiterzubilden, dass beim Einbau in ein Laserwerkzeug möglichst keine Verschmutzungen auf dem Schutzglas mehr auftreten können, sowie ein zugehöriges Laserwerkzeug anzugeben. Insbesondere soll auch sichergestellt werden, dass beim Einbau in das Laserwerkzeug das Schutzglas mit seinem Transponder korrekt zur Schreib-/Leseeinheit des Laserwerkzeugs orientiert ist.

Ein Schutzglas, bestimmt zum Einbau in ein Laserwerkzeug einer Laserbearbeitungsmaschine, und gemäß der Erfindung ist im Anspruch 1 definiert. Erfindungsgemäß dient die Handhabe sowohl als Einbauhilfe, die ein direktes Anfassen des Schutzglases überflüssig macht, als auch als Träger für den Transponder. Durch die Handhabe kann das Schutzglas ohne Berühren des Glases, und somit frei von Fingerabdrücken, eingebaut werden. Außerdem ist der an der Handhabe angebrachte Transponder optisch hochwertiger als ein auf das Schutzglas lediglich aufgeklebtes RFID-Etikett.

Der Transponder kann außen auf einer der beiden Seiten der Handhabe befestigt oder aber in der Handhabe eingehaust bzw. gefasst sein. Im letzteren Fall bildet die Handhabe dann gleichzeitig das Gehäuse des Transponders, der durch das Gehäuse zusätzlich geschützt ist.

Gemäß der Erfindung weist die Handhabe eine mechanische Kodierung, als Orientierungshilfe für den lagerichtigen Einbau des Schutzglases und somit für die richtige Ausrichtung des Transponders zu einer Schreib-/Leseeinrichtung des Laserwerkzeugs auf. Neben der korrekten Ausrichtung des Transponders zur Schreib-/Leseeinrichtung verhindert die Kodierung ein verdrehtes Einbauen des Schutzglases. Dies wäre dann der Fall, wenn die evtl. bereits verschmutzte Seite des Schutzglases in Richtung Fokussieroptik zeigen würde. Die Schmutzpartikel würden so ungehindert an die Fokussieroptik gelangen können und diese schädigen. Eine mechanische Kodierung kann besonders einfach durch eine asymmetrische Außenkontur der Handhabe, insbesondere durch eine abgeschrägte Ecke der Handhabe, oder durch eine in Dickenrichtung des Schutzglases außermittige Befestigung der Handhabe an der Umfangsfläche des Schutzglases gebildet sein.

In einer bevorzugten Ausführungsform der Erfindung ist die Handhabe so bemessen, dass ein Bediener sie nur mit Daumen und Zeigefinger fassen kann. Dazu ist es ausreichend, wenn die Breite der Handhabe in Umfangsrichtung des Schutzglases mindestens 5mm und höchstens 30mm beträgt.

In einer anderen bevorzugten Ausführungsform ist die Handhabe durch eine Fassung des Schutzglases gebildet, welche die Umfangsfläche des Schutzglases einfasst und vorteilhaft durch ein Kunststoff-Spritzgussteil gebildet sein kann, in das sowohl das Schutzglas als auch der Transponder jeweils als Einlegeteile integriert bzw. eingebettet sind. In diesem Fall ist der Transponder durch die Fassung vollständig geschützt.

Die Erfindung betrifft auch eine Schutzglaskassette mit einer Aufnahmeöffnung und mit einem wie oben ausgebildeten Schutzglas, das in die Aufnahmeöffnung eingelegt ist, wobei die Aufnahmeöffnung eine Randaussparung für die am Schutzglas befestigte Handhabe aufweist. Besonders bevorzugt weist die Randaussparung eine einer asymmetrischen Außenkontur der Handhabe entsprechende, asymmetrischen Kontur, insbesondere eine abgeschrägte Ecke, auf, um so den lagerichtigen Einbau des Schutzglases in der Aufnahmeöffnung sicherzustellen.

Die Erfindung betrifft weiterhin auch ein Laserwerkzeug einer Laserbearbeitungsmaschine mit mindestens einer wie oben ausgebildeten, in den Strahlengang eines Laserstrahls eingebauten Schutzglaskassette und mit mindestens einer Lese- und/oder Schreibeinrichtung zum berührungslosen Datenaustausch mit dem Transponder des Schutzglases der mindestens einen eingebauten Schutzglaskassette. Das Schutzglas bzw. die Schutzglaskassette ist meist am werkstückzugewandten Ende des Laserwerkzeugs angeordnet, um eine Fokussieroptik vor den bei der Werkstückbearbeitung auftretenden Partikeln und Dämpfen zu schützen. Bevorzugt weist das Laserwerkzeug eine Streulichtmessvorrichtung zur Überwachung des Schutzglases der mindestens einen eingebauten Schutzglaskassette auf Verschmutzung auf.

Vorzugsweise sind im Strahlengang des Laserstrahls mindestens zwei Schutzglaskassetten hintereinander eingebaut, wobei das eine, werkstückabgewandte Schutzglas zum Schutz einer Fokussieroptik, während der Anwender das andere, werkstückzugewandte Schutzglas tauscht, sowie als Referenzobjekt für die Streulichtmessung dient. Vorteilhafterweise sind den Schutzgläsern der mindestens zwei eingebauten Schutzglaskassetten jeweils eine Lese- und/oder Schreibeinrichtung oder eine einzige, gemeinsame Lese- und/oder Schreibeinrichtung zum berührungslosen Datenaustausch mit den Transpondern der Schutzgläser und eine gemeinsame Streulichtmessvorrichtung zur Überwachung der Schutzgläser auf Verschmutzung zugeordnet.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erstes Beispiel eines Schutzglases;
- Fig. 2: ein zweites Beispiel eines Schutzglases;
- Fig. 3: eine Schutzglaskassette mit einem darin eingelegten, erfindungsgemäßen Schutzglas; und
- Fig. 4: beispielhaft ein Laserwerkzeug mit zwei Schutzglaskassetten, in die jeweils ein erfindungsgemäßes Schutzglas eingelegt ist.

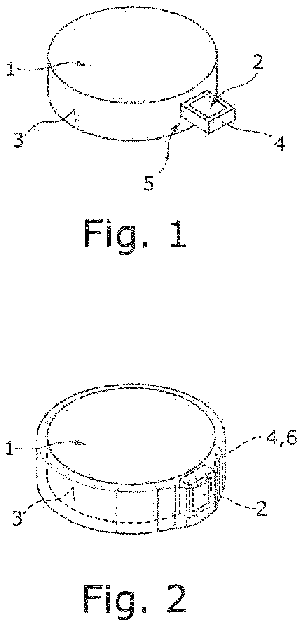

Das in **Fig. 1** gezeigte, runde Schutzglas **1** dient zum Einbau in ein Laserwerkzeug 10 (Fig. 2) einer Laserbearbeitungsmaschine und weist einen RFID-Transponder **2** auf, in dem Daten bezüglich des Schutzglases 1 berührungslos auslesbar gespeichert und/oder berührungslos speicherbar sind. Unmittelbar am Schutzglas 1, genauer gesagt an dessen Umfangsfläche **3,** ist eine den Transponder 2 tragende Handhabe **4** als Einbauhilfe befestigt, insbesondere seitlich angeklebt. Diese Handhabe 4 ist so bemessen, dass ein Bediener sie zwischen Daumen und Zeigefinger halten kann, und kann durch eine von der Umfangsfläche 3 radial nach außen abstehende Fahne ausgeführt werden, deren Breite in Umfangsrichtung des Schutzglases 1 bis ca. 10mm beträgt.

Der Transponder 2 kann außen auf einer der beiden Seiten der Handhabe 4 befestigt oder in der Handhabe 4 eingehaust bzw. gefasst sein. Im letzteren Fall bildet die Handhabe dann gleichzeitig das Gehäuse des Transponders 2.

Die Handhabe 4 ist an der Umfangsfläche 3 nicht mittig in Dickenrichtung des Schutzglases 1 angeordnet, sondern zu der in Fig. 1 oberen Schutzglasseite näher als zu der unteren Schutzglasseite beabstandet. Diese in Dickenrichtung außermittige Anordnung der Handhabe 4 stellt eine mechanische Kodierung **5** als Orientierungshilfe für den lagerichtigen Einbau des Schutzglases 1 dar. Zusätzlich kann die Handhabe 4 mit einer optischen Kennzeichnung der Einbauseite versehen sein.

Bei dem in **Fig. 2** gezeigten Schutzglas 1 ist die Handhabe 4 als eine ringförmige Fassung **6** ausgebildet, welche die Umfangsfläche 3 des Schutzglases 1 einfasst und durch ein Kunststoff-Spritzgussteil gebildet ist, in das sowohl das Schutzglas 1 als auch der Transponder 2 als Einlegeteile integriert sind.

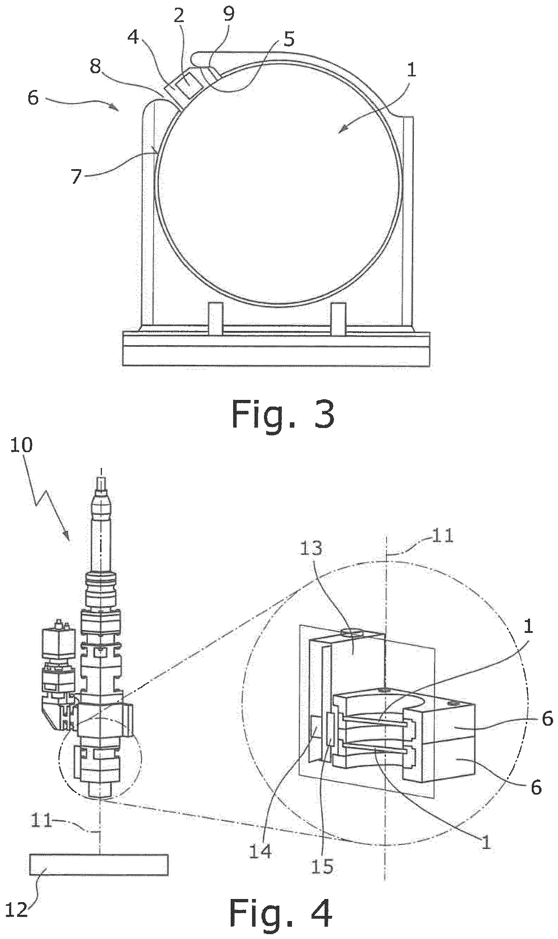

**Fig. 3** zeigt eine Schutzglaskassette **6** mit einer nach oben offenen, runden Aufnahmeöffnung **7,** in die ein Schutzglas 1 mit einer gegenüber Fig. 1 modifizierten, mechanischen Kodierung 5 von oben mithilfe der Handhabe 4 eingelegt ist. Für die radial nach außen abstehende Handhabe 4 weist die Aufnahmeöffnung 7 eine Randaussparung **8** auf. Die mechanische Kodierung 5 ist gemäß der Erfindung durch eine asymmetrische Kontur der Handhabe 4, hier durch eine abgeschrägte Ecke der Handhabe 4, gebildet, die mit einer entsprechend asymmetrischen Kontur der Randaussparung 8, hier mit einer abgeschrägten Ecke **9** der Randaussparung 8, zusammenwirkt. Durch die abgeschrägte Ecke 5 der Handhabe 4, im Zusammenwirken mit der abgeschrägten Ecke 9 der Randaussparung 8 in der Schutzglaskassette 6, ist sichergestellt, dass das Schutzglas 1 nur mit seiner richtigen Einbauseite zur Schutzglaskassette 6 und nur in der richtigen Winkeldrehlage in die Schutzglaskassette 6 eingelegt werden kann.

Das in **Fig. 4** gezeigte Laserwerkzeug (Laserbearbeitungskopf) **10** transportiert und fokussiert einen Laserstrahl **11,** der über eine Glasfaser von einer Laserquelle kommt, mittels einer hier nicht gezeigten Fokussieroptik auf ein Werkstück **12.** Um dabei die Fokussieroptik vor den bei der Werkstückbearbeitung auftretenden Partikeln und Dämpfen zu schützen, weist das Laserwerkzeug 10 an seinem werkstückzugewandten Ende zwei im Strahlengang des Laserstrahls 11 übereinander eingebaute Schutzglaskassetten 6 mit jeweils einem Schutzglas 1 auf. Die Schutzglaskassetten 6 mit ihren eingelegten Schutzgläsern 1 sind in hier nicht näher gezeigte Kassettenfächer des Laserwerkzeugs 10 eingesetzt. An einem Kontaktblock **13** des Laserwerkzeugs 10 sind eine Lese- und/oder Schreibeinrichtung **14** zum berührungslosen Datenaustausch mit den Transpondern 2 der beiden eingebauten Schutzgläser 1 und eine Streulichtmessvorrichtung **15** zur Überwachung der beiden eingebauten Schutzgläser 1 untergebracht. Über die Lese- und/oder Schreibeinrichtung 14 können die in den Transpondern 2 gespeicherten Daten ausgelesen und Daten (z.B. der aktuelle Verschmutzungsgrad der Schutzgläser 1) zurück in die jeweiligen Transponder 2 geschrieben werden. Das in Fig. 3 obere Schutzglas 1 dient einerseits zum Schutz der Fokussierlinse, während der Anwender das untere Schutzglas 1 tauscht, und andererseits als Referenzobjekt für die Streulichtmessung.

Durch ihre mechanischen Kodierung 5, im Zusammenwirken mit einer entsprechenden Gegenaussparung in den Schutzglaskassetten 6, ist sichergestellt, dass die Schutzgläser 1 mit ihrer richtigen Einbauseite zum Laserwerkzeug 10 und in der richtigen Winkeldrehlage in das Laserwerkzeug 10 eingebaut und somit korrekt zur Lese- und/oder Schreibeinrichtung 14 orientiert sind.

## Patentansprüche

1. Schutzglas (1) bestimmt zum Einbau in ein Laserwerkzeug einer Laserbearbeitungsmaschine, mit einem Transponder (2), insbesondere RFID-Transponder, in dem Daten bezüglich des Schutzglases (1) berührungslos auslesbar gespeichert und/oder berührungslos speicherbar sind, wobei unmittelbar am Schutzglas (1), insbesondere an dessen Umfangsfläche (3), eine den Transponder (2) tragende Handhabe (4) als Einbauhilfe befestigt ist und wobei die Handhabe (4) eine mechanische Kodierung (5) als Orientierungshilfe für den lagerichtigen Einbau des Schutzglases (1) aufweist,
**dadurch gekennzeichnet,**
**dass** die mechanische Kodierung (5) durch eine, gesehen in Draufsicht auf das Schutzglas (1), asymmetrische Außenkontur der Handhabe (4), insbesondere durch eine abgeschrägte Ecke der Handhabe (4), gebildet ist.

2. Schutzglas nach Anspruch 1, **dadurch gekennzeichnet, dass** die Handhabe (4) ein Gehäuse des Transponders (2) bildet.

3. Schutzglas nach Anspruch 1 oder 2, **dadurch gekennzeichnet, dass** die Handhabe (4) vom Schutzglas (1), insbesondere von dessen Umfangsfläche (3), radial nach außen absteht.

4. Schutzglas nach einem der vorhergehenden Ansprüche, **dadurch gekennzeichnet, dass** die Breite der Handhabe (4) in Umfangsrichtung des Schutzglases (1) mindestens 5mm und/oder höchstens 30mm beträgt.

5. Schutzglas nach einem der vorhergehenden Ansprüche, **dadurch gekennzeichnet, dass** die Handhabe (4) am Schutzglas (1), insbesondere an dessen Umfangsfläche (3), angeklebt ist.

6. Schutzglas nach einem der Ansprüche 1 bis 3, **dadurch gekennzeichnet, dass** die Handhabe (4) durch eine die Umfangsfläche (3) des Schutzglases (1) einfassende Fassung (6) gebildet ist.

7. Schutzglas nach Anspruch 6, **dadurch gekennzeichnet, dass** die Fassung (6) durch ein Kunststoff-Spritzgussteil gebildet ist, in das sowohl das Schutzglas (1) als auch der Transponder (2) integriert sind.

8. Schutzglaskassette (6) mit einer Aufnahmeöffnung (7) und mit einem Schutzglas (1) nach einem der vorhergehenden Ansprüche, das in die Aufnahmeöffnung (7) eingelegt ist, wobei die Aufnahmeöffnung (7) eine Randaussparung (8) für die am Schutzglas (1) befestigte Handhabe (4) aufweist.

9. Schutzglaskassette nach Anspruch 8, **dadurch gekennzeichnet, dass** die Randaussparung (8) eine einer asymmetrischen Außenkontur der Handhabe (4) entsprechende, asymmetrischen Kontur, insbesondere eine abgeschrägte Ecke (9), aufweist.

10. Laserwerkzeug (10) einer Laserbearbeitungsmaschine, mit mindestens einer in den Strahlengang eines Laserstrahls (11) eingebauten Schutzglaskassette (6) nach Anspruch 8 oder 9 und mit mindestens einer Lese- und/oder Schreibeinrichtung (14) zum berührungslosen Datenaustausch mit dem Transponder (2) des Schutzglases (1) der mindestens einen eingebauten Schutzglaskassette (6).

11. Laserwerkzeug nach Anspruch 10, **gekennzeichnet durch** mindestens zwei in den Strahlengang des Laserstrahls (11) hintereinander eingebaute Schutzglaskassetten (6), wobei den Schutzgläsern (1) der mindestens zwei eingebauten Schutzglaskassetten (6) vorzugsweise jeweils eine Lese- und/oder Schreibeinrichtung (14) oder eine einzige, gemeinsame Lese- und/oder Schreibeinrichtung (14) zum berührungslosen Datenaustausch mit den Transpondern (2) der Schutzgläser (1) zugeordnet ist.

12. Laserwerkzeug nach Anspruch 10 oder 11, **gekennzeichnet durch** mindestens eine Streulichtmessvorrichtung (15) zur Überwachung des Schutzglases (1) der mindestens einen eingebauten Schutzglaskassette (6), wobei den Schutzgläsern (1) der mindestens zwei eingebauten Schutzglaskassetten (6) vorzugsweise eine gemeinsame Streulichtmessvorrichtung (15) zur Überwachung der Schutzgläser (1) zugeordnet ist.

## Claims

1. Protective glass (1) intended for installation in a laser tool of a laser processing machine, comprising a transponder (2), in particular an RFID transponder, in which data relating to the protective glass (1) are stored in a contactlessly readable fashion and/or can be contactlessly stored, wherein
a grip (4) carrying the transponder (2) is fastened as an installation aid directly on the protective glass (1), in particular on its circumferential surface (3), and wherein the grip (4) comprises a mechanical encoding (5) as an orientation aid for correctly positioned installation of the protective glass (1),
**characterized in that**
the mechanical encoding (5) is formed by an asymmetric outer contour of the grip (4) as seen in a top view of the protective glass (1), in particular by a chamfered corner of the grip (4).

2. Protective glass according to claim 1, **characterized in that** the grip (4) forms a housing of the transponder (2).

3. Protective glass according to claim 1 or 2, **characterized in that** the grip (4) protrudes radially outward from the protective glass (1), in particular from its circumferential surface (3).

4. Protective glass according to one of the preceding claims, **characterized in that** the width of the grip (4) in the circumferential direction of the protective glass (1) is at least 5 mm and/or at most 30 mm.

5. Protective glass according to one of the preceding claims, **characterized in that** the grip (4) is adhesively bonded on the protective glass (1), in particular on its circumferential surface (3).

6. Protective glass according to one of claims 1 to 3, **characterized in that** the grip (4) is formed by a frame (6) framing the circumferential surface (3) of the protective glass (1).

7. Protective glass according to claim 6, **characterized in that** the frame (6) is formed by an injection-moulded plastic part, into which both the protective glass (1) and the transponder (2) are integrated.

8. Protective glass cassette (6) having a reception opening (7) and comprising a protective glass (1) according to one of the preceding claims, which is fitted into the reception opening (7), the reception opening (7) having an edge recess (8) for the grip (4) fastened on the protective glass (1).

9. Protective glass cassette according to claim 8, **characterized in that** the edge recess (8) has an asymmetric contour, in particular a chamfered corner (9), corresponding to an asymmetric outer contour of the grip (4).

10. Laser tool (10) of a laser processing machine, comprising at least one protective glass cassette (6) according to claim 8 or 9 installed in the beam path of a laser beam (11), and at least one read and/or write device (14) for contactless data exchange with the transponder (2) of the protective glass (1) of the at least one installed protective glass cassette (6).

11. Laser tool according to claim 10, **characterized by** at least two protective glass cassettes (6) installed behind one another in the beam path of the laser beam (11), wherein the protective glasses (1) of the at least two installed protective glass cassettes (6) are preferably respectively assigned a read and/or write device (14), or are assigned a single shared read and/or write device (14), for contactless data exchange with the transponders (2) of the protective glasses (1).

12. Laser tool according to claim 10 or 11, **characterized by** at least one scattered-light measuring apparatus (15) for monitoring the protective glass (1) of the at least one installed protective glass cassette (6), wherein the protective glasses (1) of the at least two installed protective glass cassettes (6) are preferably assigned a common scattered-light measuring apparatus (15) for monitoring the protective glasses (1).

## Revendications

1. Verre de protection (1) destiné à l'intégration dans un outil laser d'une machine d'usinage au laser, muni d'un transpondeur (2), en particulier d'un transpondeur RFID dans lequel des données relatives audit verre de protection (1) sont stockées avec faculté de lecture sans contact, et/ou peuvent être stockées sans contact, sachant qu'un élément de préhension (4) portant ledit transpondeur (2) est fixé directement, en tant qu'auxiliaire d'intégration, audit verre de protection (1) et notamment à la surface (3) du pourtour de ce dernier, ledit élément de préhension (4) étant doté d'un codage mécanique (5) remplissant la fonction d'un auxiliaire d'orientation, en vue de l'intégration en position correcte dudit verre de protection (1),
**caractérisé par le fait**
**que** le codage mécanique (5) est matérialisé par un profil extérieur de l'élément de préhension (4), asymétrique lorsque le verre de protection (1) est observé par-dessus, notamment par un coin biseauté dudit élément de préhension (4).

2. Verre de protection selon la revendication 1, **caractérisé par le fait que** l'élément de préhension (4) forme un boîtier du transpondeur (2).

3. Verre de protection selon la revendication 1 ou 2, **caractérisé par le fait que** l'élément de préhension (4) fait saillie radialement vers l'extérieur au-delà dudit verre de protection (1), notamment de la surface (3) du pourtour de celui-ci.

4. Verre de protection selon l'une des revendications précédentes, **caractérisé par le fait que** la largeur de l'élément de préhension (4) mesure 5 mm au minimum, et/ou 30 mm au maximum dans la direction périphérique dudit verre de protection (1).

5. Verre de protection selon l'une des revendications précédentes, **caractérisé par le fait que** l'élément de préhension (4) est rapporté par collage sur ledit verre de protection (1), en particulier sur la surface (3) du pourtour de ce dernier.

6. Verre de protection selon l'une des revendications 1 à 3, **caractérisé par le fait que** l'élément de préhension (4) est constitué d'une monture (6) enserrant la surface (3) du pourtour dudit verre de protection (1).

7. Verre de protection selon la revendication 6, **caractérisé par le fait que** la monture (6) est constituée d'une pièce en matière plastique moulée par injection et dans laquelle, à la fois, ledit verre de protection (1) et le transpondeur (2) sont intégrés.

8. Cassette (6) à verre de protection, comprenant une ouverture de réception (7) et un verre de protection (1) conforme à l'une des revendications précédentes, inséré dans ladite ouverture de réception (7), laquelle ouverture de réception (7) est pourvue d'un évidement marginal (8) dédié à l'élément de préhension (4) fixé audit verre de protection (1).

9. Cassette à verre de protection, selon la revendication 8, **caractérisée par le fait que** l'évidement marginal (8) est muni d'un profil asymétrique, en particulier d'un coin biseauté (9) correspondant à un profil extérieur asymétrique de l'élément de préhension (4).

10. Outil laser (10) d'une machine d'usinage au laser, comprenant au moins une cassette (6) à verre de protection conforme à la revendication 8 ou 9, intégrée dans le trajet de rayonnement d'un faisceau laser (11), et au moins un dispositif (14) de lecture et/ou d'écriture affecté à l'échange de données, sans contact, avec le transpondeur (2) dudit verre de protection (1) de ladite cassette intégrée (6) à présence minimale, dotée d'un verre de protection.

11. Outil laser selon la revendication 10, **caractérisé par** au moins deux cassettes (6) à verres de protection, intégrées en succession mutuelle dans le trajet du faisceau laser (11), sachant que, de préférence, un dispositif respectif (14) de lecture et/ou d'écriture, voire un unique dispositif commun (14) de lecture et/ou d'écriture, est associé aux verres de protection (1) des deux cassettes intégrées (6) à présence minimale, dotées de verres de protection, en vue de l'échange de données, sans contact, avec les transpondeurs (2) desdits verres de protection (1).

12. Outil laser selon la revendication 10 ou 11, **caractérisé par** au moins un dispositif (15) de mesure de lumière diffusée, dévolu à la surveillance du verre de protection (1) de la cassette intégrée (6) à présence minimale, dotée d'un verre de protection, sachant que, de préférence, un dispositif commun (15) de mesure de lumière diffusée est associé aux verres de protection (1) des deux cassettes intégrées (6) à présence minimale, dotées de verres de protection, en vue de surveiller lesdits verres de protection (1).
